(19) Europäisches Patentamt / European Patent Office / Office européen des brevets

(11) **EP 4 326 973 B1**

(12) **EUROPEAN PATENT SPECIFICATION**

(45) Date of publication and mention
of the grant of the patent:
**29.10.2025 Bulletin 2025/44**

(21) Application number: **22865915.7**

(22) Date of filing: **16.09.2022**

(51) International Patent Classification (IPC):
*F01K 25/10* (2006.01)   *F03G 7/04* (2006.01)
*F03G 7/10* (2006.01)   *F01K 27/02* (2006.01)
*F01K 23/10* (2006.01)

(52) Cooperative Patent Classification (CPC):
**F03G 7/129; F01K 23/10; F01K 25/10; F01K 27/02**

(86) International application number:
**PCT/TR2022/050998**

(87) International publication number:
**WO 2023/244192 (21.12.2023 Gazette 2023/51)**

(54) **TURBO MACHINE**

TURBOMASCHINE

TURBOMACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2022 TR 202210075**

(43) Date of publication of application:
**28.02.2024 Bulletin 2024/09**

(73) Proprietor: **Ari, Bayram**
**Kadiköy/Istanbul (TR)**

(72) Inventor: **Ari, Bayram**
**Kadiköy/Istanbul (TR)**

(74) Representative: **Berkkam, Ayfer**
**Berkkam Patent Consulting
Remzi Oguz Arik Mah. Bestekar Cad.
Bestekar Is Merkezi No: 49/19
06680 Cankaya - Ankara (TR)**

(56) References cited:
| | |
|---|---|
| EP-A1- 0 267 992 | EP-A1- 4 001 599 |
| WO-A1-2013/073972 | WO-A1-2019/094941 |
| WO-A1-2021/191786 | US-A- 5 704 209 |
| US-A1- 2012 128 463 | US-A1- 2021 025 372 |
| US-A1- 2022 145 778 | US-B1- 6 170 264 |
| US-B2- 10 830 107 | |

## Description

### Technical Field

The invention relates to a two-cycle turbo machine (gas turbine cycle and steam turbine cycle) operating at atmospheric air temperature.

### Prior Art

Turbo machines are machines with rotating blades that convert fluid movement into useful power. Today, there are power systems that enable many machines to operate. Power systems generally use petrol, diesel, fuel oil, natural gas, LPG, coal and nuclear fuels as fuel sources. These fuel types damage the environment. Therefore, a power system that utilises atmospheric air is of great importance.

In the United States patent document numbered US5680764A, which is in the known state of the prior art, low or no pollution-free engine is mentioned in providing power for vehicles or other power applications. The engine has an air inlet that collects air from the surrounding environment. The air is compressed in several compression stages with intercoolers between the compressors. The air is then purged of components with a relatively high liquefaction in a cleaner and then expanded in a turboexpander, which allows the air to be cooled close to air liquefaction temperatures. The air is then passed through a trimmer that removes nitrogen.

In the United States patent document numbered US2004003592A1, which is in the known state of the prior art, it is mentioned that there is provided a low or no pollution-free engine for providing power in vehicles or other power applications. The engine has an air inlet that collects air from the surrounding environment. Some of the nitrogen in the air is removed. The remaining gas contains mostly oxygen, which is then directed to a gas generator.

In the European patent document numbered EP3075985A1, which is in the known state of the prior art, the turbo machine is mentioned. This turbo machine comprises a compressor configured to create a compressed air stream exiting the outlet section and compressing the air received at the inlet section. A combustion chamber is operatively connected to the compressor and the combustion chamber receives the compressed air flow. A turbine is operatively connected to the combustion chamber and the turbine receives the combustion gas flow in the combustion chamber. A cooling system is operatively connected to the turbine housing. The cooling system includes a plurality of heat pipes in thermal interaction with and connected to the turbine housing.

In the Chinese patent document numbered CN105370409A, which is in the known state of the prior art, a turbo machine system including at least one compressor part, a turbine part operatively connected to the compressor part, and at least one combustion chamber fluidly connected to the compressor part and turbine part is mentioned. It includes elements such as turbine, compressor, inlet of surrounding air, steam turbine, heat exchanger.

When the existing studies in the prior art were examined, it was necessary to realise a turbo machine that operates with the temperature of the air in the atmosphere instead of fossil fuels and does not require any other fuel in order to reduce the emission of toxic gases such as CO, $CO_2$ and $NO_x$ in nature. US5704209A discloses an externally fired gas turbine system. The externally fired gas turbine system has a compressor for compressing ambient air and producing compressed air, an indirect-contact air heat exchanger for heating the compressed air to produce heated compressed air, an air turbine for expanding the heated and compressed air to produce expanded air, and a generator connected to the turbine for generating electricity that is supplied to a load. The system also includes a source of energy including solar energy, oil shale, solid waste fuel, land fill gas, biomass, or combinations thereof, and/or solid, liquid, or gaseous hydrocarbon fuels, for adding heat to the compressed air in the air heat exchanger and producing heat depleted gases that exit the air heat exchanger. Also provided is a closed Rankine cycle power plant having a water heat exchanger for vaporizing water and producing steam using heat contained in the heat depleted gases, a steam turbine for expanding the steam and producing power for the load, and expanded steam, a steam condenser for condensing the expanded steam and producing condensate, and means for returning said condensate to the water heat exchanger. WO2021/191786A1 discloses a plant for storing energy. The plant comprises a casing for the storage of a working fluid other than atmospheric air, in gaseous phase and in equilibrium of pressure with the atmosphere; a tank for the storage of said working fluid in liquid or supercritical phase with a temperature close to the critical temperature; wherein said critical temperature is close to the ambient temperature. The plant is configured to perform a closed cyclic thermodynamic transformation (CTT), first in one direction in a charge configuration and then in an opposite direction in a discharge configuration, between said casing and said tank; wherein in the charge configuration the plant stores heat and pressure and in the discharge configuration the plant generates energy. The plant is also configured to define a closed circuit and to perform a closed thermodynamic cycle (TC) in the closed circuit with at least a part of the working fluid, optionally while the plant is in the charge configuration or in the discharge configuration. US2022/145778A1 discloses an energy storage plant. The energy storage plant includes a casing for the storage of a working fluid other than atmospheric air, in a gaseous phase and in equilibrium of pressure with the atmosphere; a tank for the storage of said working fluid in a liquid or supercritical phase with a temperature close to the

**EP 4 326 973 B1**

critical temperature; wherein said critical temperature is close to the ambient temperature. The plant is configured to carry out a closed thermodynamic cyclic transformation, first in one direction in a charge configuration and then in the opposite direction in a discharge configuration, between said casing and said tank; wherein in the charge configuration the plant stores heat and pressure and in the discharge configuration generates energy.

**Summary and Object of the Invention**

The invention adapts the following technical solution.

A two-cycle turbo machine according to claim 1.

Preferably, the turbo machine comprises an electric motor connected to the gas turbine and used to compensate for the losses of the compressor and the losses of the gas turbine.

Preferably, the turbo machine comprises a current frequency changer connected to the electric motor which prevents the compressor from overheating.

Preferably, the turbo machine comprises a transmitter which is connected to the current frequency changer and enables the current value to be adjusted.

Preferably, the turbo machine comprises an alternator connected to the steam turbine for generating energy.

Preferably, the turbo machine comprises a ventilator connected to the heater I, which heats the air.

A method of operating a two-cycle turbo machine according to claim 7.

Preferably, the method comprises the compression of the refrigerant liquid coming out of the condenser in aircraft by the pump up to a pressure of 4000 kPa.

The object of this invention is to realise a turbo machine that operates with the temperature of the air in the atmosphere instead of fossil fuels and does not require any other fuel in order to reduce the emission of toxic gases such as CO, $CO_2$ and $NO_x$ in nature.

Another object of the invention is to realise a turbo machine for generating electricity when solar panels cannot generate electricity when there is no sun, or when electricity cannot be generated from wind energy when there is no wind.

Another object of this invention is the realisation of a turbo machine that allows rain to fall.

**Brief Description of the Drawings**

The turbo machine realised to achieve the objects of the present invention is shown in the accompanying figures.

These figures;

**Figure-1:** The subject of the invention is the schematic view of the turbo machine used in land, sea, lake and river.

**Figure-2:** The subject of the invention is the view of the entropy-temperature graph of the use of the turbo machine on land, sea, lake and river.

**Figure-3:** The subject of the invention is the schematic view of the use of the turbo machine in aircraft.

**Figure-4:** The subject of the invention is the view of the entropy-temperature graph of the use of the turbo machine in aircraft.

**Figure-5:** In another embodiment of the invention, a schematic view of a rain-making process.

**Figure-6:** In another embodiment of the invention, the view of the entropy-temperature graph of the rain-making process.

The parts in the figures are numbered one by one and the equivalents of these numbers are given below.

1. Heat exchanger
2. Compressor
3. Cooler
4. Gas turbine
5. Condenser
6. Pump
7. Heater I
8. Heater II
9. Steam turbine
10. Electric motor
11. Current frequency changer
12. Transmitter
13. Alternator
14. Tube I

15. Tube II
16. Ventilator
17. Valve
18. Turbine III
19. Control system

**Detailed Description of the Invention**

The invention relates to a turbo machine which is operated by the atmospheric air temperature and does not require any other fuel, and comprises the following parts:

- heat exchanger (1), which is located in the machine and provides cooling of the atmospheric air,
- compressor (2) connected to the heat exchanger (1), which compresses the cold air to a pressure of approx. 15 bar,
- gas turbine (4) connected to tube I (14) and enabling the air to perform work,
- a condenser (5) connected to the gas turbine (4) and condensing the refrigerant R134a in the condenser (5) via the air coming from the gas turbine (4),
- pump (6) connected to the condenser (5) and used to increase the pressure of the liquid coming out of the condenser (5),
- heater I (7) for heating the liquid coming out of the pump (6) to atmospheric temperature to obtain heated and pressurized gas,
- steam turbine (9), in which the heated and pressurized gas from heater I (7) in conjunction with heater I (7) is used to drive the steam turbine (9),
- electric motor (10) connected to the gas turbine (4) and used to compensate for the losses of the compressor (2) and the losses of the gas turbine (4),
- current frequency changer (11), which is connected to the electric motor (10) and prevents the compressor (2) from overheating,
- transmitter (12), which is connected to the current frequency changer (11) and enables the current value to be adjusted,
- alternator (13), which is connected to the steam turbine (9) and provides energy generation,
- ventilator (16) connected to the heater I (7) and heating the air.

The invention concerns a method of operation of a turbo machine which is fuelled by the temperature of atmospheric air and does not require any other fuel, and comprises the following steps:

- cooling of atmospheric air by heat exchanger (1),
- compression of the cooled air by the compressor (2) to a pressure of approx. 15 bar,
- the compressed and heated air is then transmitted to the gas turbine (4),
- transmission of air from the gas turbine (4) to the condenser (5),
- compression of the liquid coming out of the condenser (5) with the help of the pump (6),
- the liquid coming out of the pump (6) is heated to atmospheric temperature by the heater I (7) to obtain heated and pressurized gas,
- the heated and pressurized gas enters the steam turbine (9) and does work by expanding.

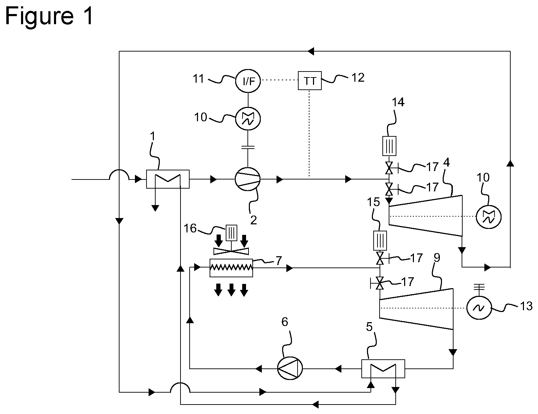

The subject of the invention is a turbo machine which operates with atmospheric air temperature. The machine consists of a gas turbine (4) and a steam turbine (9). Therefore, it is a two-cycle machine.
Gas turbine (4) cycle: The cold air cooled from the heat exchanger (1) enters the compressor (2). The cold air is compressed in the compressor (2) to a pressure of approx. 15 bar. The compressed and heated air enters the gas turbine (4). The gas turbine (4) ideally fulfils the work of the compressor (2). Unmet work losses are supplied by the steam turbine (9). The expanding air in the gas turbine (4) drops to about 80 kPa. The exhaust from the gas turbine (4) goes to the steam turbine (9) condenser (5) where the steam engine fluid R134a is condensed. Different suitable fluids can be used instead of R134a fluid The air coming out of the condenser (5) heats up a little and enters the heat exchanger (1) and is discharged from the exhaust. Thus, the gas turbine (4) cycle is completed. The outlet air of the gas turbine (4) condenses the fluid of the steam turbine (9). Thus, the fluid is condensed in the condenser (5) in the steam turbine (9) circuit. (Figure 1)
To condense 1 kg of refrigerant;

$$1 \text{ kg} * (\text{inlet enthalpy of refrigerant} - \text{outlet enthalpy of refrigerant}) = m \text{ kg}$$

The formula giving the amount of air circulating in the gas turbine circuit corresponding to 1 kg R134a is given below.

$$1 \text{ kg R134a} \times (h_{10}\text{-}h_2) = m \text{ (kg)} \times (h_5\text{-}h_4) \text{ (Formula I)}$$

From the formula, the m information is obtained and the amount of air to be circulated in the gas turbine (4) circuit is found. Pressure and temperature values are found with the formula;

$$\frac{T_3}{T_2} = \left(\frac{P_3}{P_2}\right)^{\frac{k-1}{k}} \text{ (Formula II)}$$

which is used in adiabatic compression and expansion where there is no difference in $C_p$ specific heats. Here k=1,4, $P_2$ atmospheric pressure is 1,01325 bar and $P_3$ pressure is decreased to approximately 80 kPa at the end.

Compressor (2) outlet pressure is the turbine inlet pressure. There is little change in $C_p$ in these pressure and temperature ranges. In the gas turbine (4) circuit, the gas turbine (4) ideally provides the work of the compressor (2). The electric motor (10) is switched on to provide the losses of the compressor (2) and the losses of the gas turbine (4). Therefore, the system operates in regime.

The electric motor (10) obtains its energy from the steam turbine (9). Tube I (14) is used for initial progress. When the system starts to operate regularly, tube I (14) is filled and valve (17) is closed. It is prepared for a 2nd stop.

The compressor (2) heats up too much when it reaches 15 bar or above. In order to prevent this heating, a current frequency changer (11) system enters the circuit. The outlet temperature of the compressor (2) is set to a certain state. In initial operation, the temperature transmitter (12) at the end of the compressor (2) switches the frequency and adjusts the current. The compressor (2) prevents the engine from being overstressed and overheating. It enters the regime state and then the steam turbine (9), heater I (7), condenser (5) and pump (6) are activated. The system operates at full load. The cold air coming out of the condenser (5) is slightly below the condensing temperature and goes to the heat exchanger (1). It heats up to ambient temperature in the heat exchanger (1). Thus, the gas turbine (4) circuit is completed.

Steam turbine (9) cycle: The liquid R134a from the condenser (5) is pumped to a pressure of 200 kPa by means of pump (6). The liquid coming out of the pump (6) is heated to atmospheric temperature by heater I (7). The heated and pressurised gas enters the steam turbine (9) and does work by expanding. The vapour coming out of the steam turbine (9) enters the condenser (5) again and thus the steam turbine (9) circuit is completed.

After the R134a refrigerant is condensed with cold air in the condenser (5), it is pumped to heater I (7) by means of pump (6), heater I (7) is heated to ambient temperature by means of a fan (16). This heating is achieved by forced convection heat transfer. The air speed blown by the fan (16) must be greater than or equal to 5 m/s. Otherwise, the water vapour in the air may condense on the heater I (7) pipes. For this reason, it must be dragged quickly over the pipe before condensation occurs. Tube II (15), like tube I (14), is used for initial progress. After the system has made progress, the valve (17) of tube I (14) and tube II (15) is closed. It prepares for a 2nd stop. (Figure 1)

The cold air from the heat exchanger (1) is compressed by the compressor (2) until it reaches a pressure of about 15 bar and adiabatic state (Q=0). Since there is a hot air inlet at the first start-up, the current and frequency changer (11) will be activated. The engine gradually heats up with the temperature received from the temperature transmitter (12) at the output of the compressor (2). Air compressed to 15 bar pressure enters. The air taken from the outlet temperature of the compressor (2) heats the heater II (8) in the steam turbine (9) circuit by means of a heat exchanger (1). This process is applicable to a different embodiment of the invention for use in aircraft.

The main operation of the subject of the invention turbo machine is performed by the steam turbine (9). The steam turbine (9) rotates and drives the alternator (13). The alternator (13) generates electricity. It moves with electric motors fixed to the wheels, such as the recently fashionable electric cars. Or it drives a machine in the classical way. Whichever is suitable is decided in the project design.

In this system, the steam turbine (9) operates by expanding from ambient temperature to approximately -100°C. The outgoing R134a refrigerant enters the condenser (5). Thus, the circuit is completed.

Thermal efficiency is shown

$$\eta_{thermal} = 1 - \frac{T_{exhaust}}{T_{input}} \text{ (Formula III)}$$

in Carnot cycle.

$$\eta_{thermal} = 1 - \frac{273,15-100}{273,15+40} \rightarrow \eta_{thermal} = 44.707\% \text{ (Formula IV)}$$

It is a theoretical efficiency. It is for a reversible state. If we compare it with otto and diesel, it is a very good result. It is also the work obtained without using any fuel. Under normal conditions, the efficiency of autto and diesel cycles is 35%.

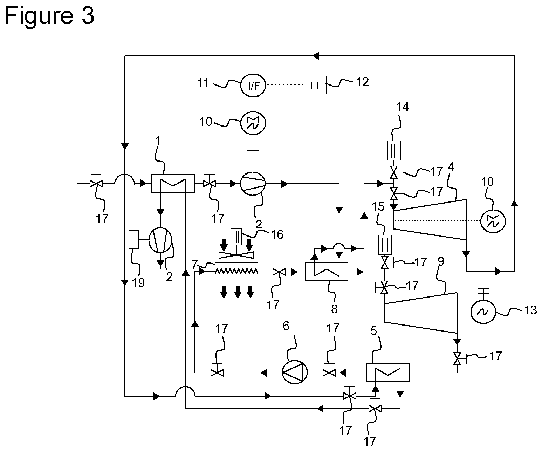

In a different embodiment of the system according to the invention, where the system according to the invention is used in aircraft, a heater II (8) is added to the system, which is connected to the heater I (7) and heats the fluid. In this case, the steam turbine (9) connected to the heater I (7) is connected to the heater II (8) and enables the heated and pressurized gas coming from the heater II (8) to perform work. In addition, a compressor (2) connected to the heat exchanger (1) and a control system (19) that adjusts the current and frequency values by sensing the pressure are added to the system. (Figure 3)

Normally the clouds are high up. The pressure is lower than sea level pressure. Since the exhaust pressure is approximately 1 atmosphere, the exhaust air is distributed in the distributors. Due to the very cold coolant passing through the pipe, water particles are formed on the pipe surfaces in the honeycomb as atmospheric air passes through heater I (7) and heater II (8). At velocities above v = 5 m/s, these particles are dragged and discharged by the flowing air. So that the water particles do not freeze and lock the cooler core. Since it can make rain, hail and snow, the speed of the aircraft or helicopter should be decided by meteorologists. The ability to make it rain, which is one of the objects of the invention in question, provides a solution against drought in summer.

The aircrafts operate both on the ground and in the air. It lands at the first operate and at the end. In this case the exhaust varies between 22.625 kPa and 101.325 kPa. Therefore, the outlet pressure of the gas turbine (4) is taken as 22.625 kPa. It operates at this head for about 99% of the operating time. More work is taken from the gas turbine (4). In order to provide this system, the control system (19) is added to the compressor (2), which regulates the pressure and provides frequency current control.

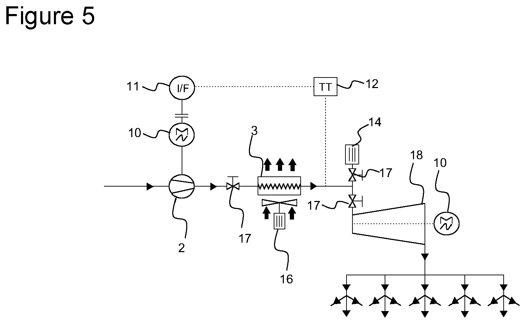

In a different embodiment of the subject of the invention turbo machine, the air sucked from the atmosphere is compressed by means of a compressor (2). The outlet air is cooled by means of a fan (16) mounted under the helicopter or aeroplane and entrained upwards. If a pilot is used, the room is heated. Otherwise, it is directed up the sides of the airplane. Outside the distributor coil is fixed under the vehicle. The work of the compressor (2) is performed by turbine III (18). Insufficient energy is supplied by the energy taken from the airplane. The airplane or helicopter manoeuvres back and forth in front of the clouds to cool them. They make it rain, snow and hail. In the different embodiment of the subject of the invention turbo machine, the hot air blown from the bottom of the aircraft, for example, is blown hotter through the heater I (7). In this way, more work is done and energy loss is less. (Figure 5)

All battery-powered vehicles have to wait for 8 hours for recharging after charging and their life span is 2-3 years. In the turbo machine, the life span is estimated to be 25 years. It can also fulfil the three purposes described above at no additional cost.

The advantages obtained with the developed turbo machine are listed below.

- The machine zeroises the damage caused by fossil fuels to nature and living things. Since it operates with the temperature of the air in the atmosphere, there is no fuel tank and also fresh air is provided from the exhaust.
- The air is cooled by the heater and can prevent drought.

The turbo machine subject to the invention can be used as a drive engine in cars, minibuses, buses, vans, trucks and lorries on land. At sea; it can be used as a propulsion engine in ships and submarines.

There are about 8 parts in the inventive turbo machine. It is impossible to place all of these parts in the front of land vehicles. As in electric vehicles, it is placed at the front and bottom of the vehicle. Before this assembly work, a platform is built on the chassis. All devices are assembled on the platform. It is then covered with the body. The body is tilted sideways or forwards with the help of hinges. After the repair and maintenance process is finished, the body is brought to its place and tightened. This assembly and disassembly process is carried out with the help of forklift or crane.

## Claims

1. A two-cycle turbo machine comprising a gas turbine cycle and a steam turbine cycle and which is configured to be operated by using only the temperature of atmospheric air, wherein the turbo machine comprises the following parts:

    - a heat exchanger (1), which is located inside the turbo machine and configured to cool the incoming external atmospheric air to obtain a cooled air flow,
    - a compressor (2) connected to the heat exchanger (1), configured to compress the cooled air flow coming from the heat exchanger (1) to a pressure of approx. 15 bar to obtain a pressurized and heated air flow,

- a tube I (14),
- a gas turbine (4) connected to the tube I (14) and enabling the pressurized and heated air flow coming from the compressor (2) to perform work and to produce a cold outlet air flow with a pressure of approx. 0,8 bar,

**characterized in that** the two-cycle turbo machine further comprises:

- a condenser (5) connected to the gas turbine (4) and configured to condense a refrigerant gas in the condenser (5) using the cold outlet air flow coming from the gas turbine (4) to obtain a refrigerant liquid, further comprising means for transferring the cold outlet air flow used in the condenser (5) to the heat exchanger (1) for the cooling of the incoming external atmospheric air, thereby completing the gas turbine cycle,
- a pump (6) connected to the condenser (5) and configured to increase the pressure of the refrigerant liquid coming out of the condenser (5) to obtain a pressurized refrigerant liquid,
- a heater I (7) for heating the pressurized refrigerant liquid coming out of the pump (6) to atmospheric temperature to obtain a heated and pressurized refrigerant gas,
- a steam turbine (9) connected to the heater I (7) and enabling the heated and pressurized refrigerant gas coming from the heater I (7) to perform work and to produce an outlet vapor, further comprising means for transferring the outlet vapor to the condenser (5) for using the outlet vapor as the refrigerant gas to be condensed, thereby completing the steam turbine cycle.

2. The two-cycle turbo machine according to claim 1, **characterised in that** the turbo machine comprises an electric motor (10) connected to the gas turbine (4) and used to compensate for the losses of the compressor (2) and the losses of the gas turbine (4).

3. The two-cycle turbo machine according to claim 2, **characterised in that** the turbo machine comprises a current frequency changer (11) connected to the electric motor (10) which prevents the compressor (2) from overheating.

4. The two-cycle turbo machine according to claim 3, **characterised in that** the turbo machine comprises a transmitter (12) which is connected to the current frequency changer (11) and enables the current value to be adjusted.

5. The two-cycle turbo machine according to any one of claims 1-4, **characterised in that** the turbo machine comprises an alternator (13) connected to the steam turbine (9) for generating energy.

6. The two-cycle turbo machine according to any one of claims 1-5, **characterised in that** the turbo machine comprises a ventilator (16) connected to the heater I (7), which heats the air.

7. A method of operating a two-cycle turbo machine which, comprising a gas turbine cycle and a steam turbine cycle, and configured to be operated by using only the temperature of atmospheric air, wherein the method comprises the following steps:

- cooling the incoming external atmospheric air by a heat exchanger (1) to obtain a cooled air flow,
- compressing the cooled air flow coming from the heat exchanger (1) by a compressor (2) to a pressure of approx. 15 bar to obtain a pressurized and heated air flow,
- transferring the pressurized and heated air flow coming from the compressor (2) to a gas turbine (4) to perform work and to produce a cold outlet air flow with a pressure of approx. 0,8 bar, **characterized in that** the method further comprises the following steps:

- transferring the cold outlet air flow coming from the gas turbine (4) to a condenser (5) for condensing a refrigerant gas in the condenser (5) using the cold outlet air flow coming from the gas turbine (4) to obtain a refrigerant fluid, wherein the cold outlet air flow used in the condenser (5) is transferred to the heat exchanger (1) for the cooling of the incoming external atmospheric air, thereby completing the gas turbine cycle,
- compressing the refrigerant liquid coming out of the condenser (5) using a pump (6) to obtain a pressurized refrigerant liquid,
- heating the pressurized refrigerant liquid coming out of the pump (6) to atmospheric temperature by a heater I (7) to obtain a heated and pressurized refrigerant gas,
- transferring the heated and pressurized refrigerant gas coming from the heater I (7) to a steam turbine (9) to perform work by expanding and to produce an outlet vapor, wherein the outlet vapor coming out of the stream turbine (9) is transferred to the condenser (5) for using the outlet vapor as the refrigerant gas to be condensed, thereby completing the stream turbine cycle.

8. The method of operation of the two-cycle turbo machine according to claim 7, **characterised by** comprising the compression of the refrigerant liquid coming out of the condenser of an aircraft by the pump (6) up to a pressure of 4000 kPa.

**Patentansprüche**

1. Eine Zweizyklus-Turbomaschine, die einen Gasturbinenzyklus und einen Dampfturbinenzyklus umfasst und so konfiguriert ist, dass sie durch die Temperatur der Umgebungsluft betrieben wird, wobei die Turbomaschine die folgenden Teile umfasst:

   - einen Wärmetauscher (1), der sich innerhalb der Turbomaschine befindet und so konfiguriert ist, dass er die einströmende Außenluft kühlt, um einen gekühlten Luftstrom zu erhalten,
   - einen Kompressor (2), der mit dem Wärmetauscher (1) verbunden ist und so konfiguriert ist, dass er den vom Wärmetauscher kommenden gekühlten Luftstrom auf einen Druck von ca. 15 bar komprimiert, um einen unter Druck stehenden und erwärmten Luftstrom zu erhalten,
   - ein Rohr I (14),
   - eine mit dem Rohr I (14) verbundene Gasturbine (4), die es dem vom Kompressor (2) kommenden unter Druck stehenden und erwärmten Luftstrom ermöglicht, Arbeit zu verrichten und einen kalten Außenluftstrom mit einem Druck von ca. 0,8 bar zu erzeugen,

   **dadurch gekennzeichnet, dass** die Zweizyklus-Turbomaschine ferner umfasst:

   - einen Kondensator (5), der mit der Gasturbine (4) verbunden ist und so konfiguriert ist, dass er ein Kältemittelgas im Kondensator (5) unter Verwendung des kalten Auslassluftstroms aus der Gasturbine (4) kondensiert, um eine Kältemittelflüssigkeit zu erhalten, wobei sie ferner Mittel zum Übertragen des im Kondensator (5) verwendeten kalten Auslassluftstroms zum Wärmetauscher (1) zum Kühlen der einströmenden Außenluft umfasst, wodurch der Gasturbinenzyklus abgeschlossen wird,
   - eine Pumpe (6), die mit dem Kondensator (5) verbunden ist und so konfiguriert ist, dass sie den Druck der aus dem Kondensator (5) austretenden Kühlflüssigkeit erhöht, um eine unter Druck stehende Kühlflüssigkeit zu erhalten,
   - eine Heizvorrichtung I (7) zum Erhitzen der aus der Pumpe (6) austretenden unter Druck stehenden Kühlflüssigkeit auf Atmosphärentemperatur, um ein erhitztes und unter Druck stehendes Kühlgas zu erhalten,
   - eine mit der Heizvorrichtung I (7) verbundene Dampfturbine (9), die es dem erwärmten und unter Druck stehenden Kältemittelgas aus der Heizvorrichtung I (7) ermöglicht, Arbeit zu verrichten und einen Auslassdampf zu erzeugen, ferner umfassend Mittel zum Übertragen des Auslassdampfs zum Kondensator (5), um den Auslassdampf als zu kondensierendes Kältemittelgas zu verwenden und dadurch den Dampfturbinenkreislauf zu vervollständigen.

2. Die Zweizyklus-Turbomaschine nach Anspruch 1, **dadurch gekennzeichnet, dass** die Turbomaschine einen Elektromotor (10) umfasst, der mit einer Gasturbine (4) verbunden ist und zum Ausgleich der Verluste des Kompressors (2) und der Verluste der Gasturbine (4) dient.

3. Die Zweizyklus-Turbomaschine nach Anspruch 2, **dadurch gekennzeichnet, dass** die Turbomaschine einen mit dem Elektromotor (10) verbundenen Stromfrequenzwandler (11) umfasst, der eine Überhitzung des Kompressors (2) verhindert.

4. Die Zweizyklus-Turbomaschine nach Anspruch 3, **dadurch gekennzeichnet, dass** die Turbomaschine einen Sender (12) umfasst, der mit einem Stromfrequenzumrichter (11) verbunden ist und die Einstellung des Stromwerts ermöglicht.

5. Die Zweizyklus-Turbomaschine gemäß einem der Ansprüche 1 bis 4, **dadurch gekennzeichnet, dass** die Turbomaschine einen mit der Dampfturbine (9) verbundenen Generator (13) zur Energieerzeugung umfasst.

6. Die Zweizyklus-Turbomaschine gemäß einem der Ansprüche 1 bis 5, **dadurch gekennzeichnet, dass** die Turbomaschine einen Ventilator (16) umfasst, der mit dem Heizgerät I (7) verbunden ist, das die Luft erwärmt.

7. Verfahren zum Betreiben einer Zweizyklus-Turbomaschine, die einen Gasturbinenzyklus und einen Dampfturbinenzyklus umfasst und so konfiguriert ist, dass sie nur unter Verwendung der Temperatur der Umgebungsluft betrieben wird, wobei das Verfahren die folgenden Schritte umfasst:

- Kühlen der einströmenden Umgebungsluft durch einen Wärmetauscher (1), um gekühlte Luft zu erhalten,
- Komprimieren des aus dem Wärmetauscher (1) kommenden gekühlten Luftstroms durch einen Kompressor (2) auf einen Druck von ca. 15 bar, um einen unter Druck stehenden und erwärmten Luftstrom zu erhalten,
- Weiterleiten des unter Druck stehenden und erwärmten Luftstroms aus dem Kompressor (2) zu einer Gasturbine (4), um Arbeit zu verrichten und einen kalten Auslassluftstrom mit einem Druck von ca. 0,8 bar zu erzeugen,

**dadurch gekennzeichnet, dass** das Verfahren ferner die folgenden Schritte umfasst:

- Weiterleiten des kalten Auslassluftstroms aus der Gasturbine (4) zu einem Kondensator (5), um ein Kältemittelgas im Kondensator (5) unter Verwendung des kalten Auslassluftstroms aus der Gasturbine (4) zu kondensieren, um eine Kältemittelflüssigkeit zu erhalten, wobei der im Kondensator (5) verwendete kalte Auslassluftstrom zum Kühlen der einströmenden Außenluft zum Wärmetauscher (1) weitergeleitet wird, wodurch der Gasturbinenzyklus abgeschlossen wird,
- Komprimieren der aus dem Kondensator (5) austretenden Kältemittelflüssigkeit unter Verwendung einer Pumpe (6), um eine unter Druck stehende Kältemittelflüssigkeit zu erhalten,
- Erwärmen der unter Druck stehenden Kältemittelflüssigkeit, die aus der Pumpe (6) austritt, auf Umgebungstemperatur durch eine Heizvorrichtung I (7), um ein erwärmtes und unter Druck stehendes Kältemittelgas zu erhalten,
- Übertragen des erhitzten und unter Druck stehenden Kältemittelgases, das aus dem Heizgerät I (7) kommt, zu einer Dampfturbine (9), um durch Expansion Arbeit zu verrichten und einen Auslassdampf zu erzeugen, wobei der aus der Dampfturbine (9) austretende Auslassdampf zum Kondensator (5) übertragen wird, um den Auslassdampf als zu kondensierendes Kältemittelgas zu verwenden, wodurch der Dampfturbinenzyklus abgeschlossen wird.

8. Verfahren zum Betrieb einer Zweizyklus-Turbomaschine gemäß Anspruch 7, **dadurch gekennzeichnet, dass** es das Komprimieren der aus dem Kondensator eines Flugzeugs austretenden Kältemittelflüssigkeit durch die Pumpe (6) auf einen Druck von 4000 kPa umfasst.

**Revendications**

1. Une machine turbo à deux cycles comprenant un cycle de turbine à gaz et un cycle de turbine à vapeur, configurée pour fonctionner à la température de l'air atmosphérique, dans laquelle la machine turbo comprend les parties suivantes:

- un échangeur de chaleur (1), qui est situé à l'intérieur de la turbomachine et configuré pour refroidir l'air atmosphérique extérieur entrant afin d'obtenir un flux d'air refroidi,
- un compresseur (2) relié à l'échangeur de chaleur (1), configuré pour comprimer le flux d'air refroidi provenant de l'échangeur de chaleur à une pression d'environ 15 bars afin d'obtenir un flux d'air pressurisé et chauffé,
- un tube I (14),
- une turbine à gaz (4) reliée au tube I (14) et permettant au flux d'air pressurisé et chauffé provenant du compresseur (2) d'effectuer un travail et de produire un flux d'air froid sortant à une pression d'environ 0,8 bar,

**caractérisée en ce que** la turbomachine à deux cycles comprend en outre:

- un condenseur (5) relié à la turbine à gaz (4) et configuré pour condenser un gaz réfrigérant dans le condenseur (5) en utilisant le flux d'air froid sortant provenant de la turbine à gaz (4) afin d'obtenir un liquide réfrigérant, comprenant en outre des moyens pour transférer le flux d'air froid sortant utilisé dans le condenseur (5) vers l'échangeur de chaleur (1) pour le refroidissement de l'air atmosphérique externe entrant, complétant ainsi le cycle de la turbine à gaz,
- une pompe (6) reliée au condenseur (5) et configurée pour augmenter la pression du liquide réfrigérant sortant du condenseur (5) afin d'obtenir un liquide réfrigérant sous pression,
- un réchauffeur I (7) pour chauffer le liquide réfrigérant sous pression sortant de la pompe (6) à la température atmosphérique afin d'obtenir un gaz réfrigérant chauffé et sous pression,

- une turbine à vapeur (9) reliée au réchauffeur I (7) et permettant au gaz réfrigérant chauffé et pressurisé provenant du réchauffeur I (7) d'effectuer un travail et de produire une vapeur de sortie, comprenant en outre des moyens pour transférer la vapeur de sortie vers le condenseur (5) afin d'utiliser la vapeur de sortie comme gaz réfrigérant à condenser, complétant ainsi le cycle de la turbine à vapeur.

2. Turbo-machine à deux cycles selon la revendication 1, **caractérisée en ce que** la turbo-machine comprend un moteur électrique (10) relié à une turbine à gaz (4) et utilisé pour compenser les pertes du compresseur (2) et les pertes de la turbine à gaz (4).

3. La turbomachine à deux cycles selon la revendication 2, **caractérisée en ce que** la turbomachine comprend un convertisseur de fréquence (11) connecté au moteur électrique (10) qui empêche le compresseur (2) de surchauffer.

4. Turbo-machine à deux cycles selon la revendication 3, **caractérisée en ce que** la turbo-machine comprend un émetteur (12) qui est connecté à un convertisseur de fréquence de courant (11) et permet de régler la valeur du courant.

5. La turbomachine à deux cycles selon l'une quelconque des revendications 1 à 4, **caractérisée en ce que** la turbomachine comprend un alternateur (13) relié à la turbine à vapeur (9) pour produire de l'énergie.

6. La turbomachine à deux cycles selon l'une quelconque des revendications 1 à 5, **caractérisée en ce que** la turbomachine comprend un ventilateur (16) relié au réchauffeur I (7), qui réchauffe l'air.

7. Procédé de fonctionnement d'une turbomachine à deux cycles qui comprend un cycle de turbine à gaz et un cycle de turbine à vapeur, et qui est configurée pour fonctionner en utilisant uniquement la température de l'air atmosphérique, dans lequel le procédé comprend les étapes suivantes :

   - refroidir l'air atmosphérique extérieur entrant à l'aide d'un échangeur de chaleur (1) afin d'obtenir de l'air refroidi,
   - comprimer le flux d'air refroidi provenant de l'échangeur de chaleur (1) à l'aide d'un compresseur (2) à une pression d'environ 15 bars afin d'obtenir un flux d'air pressurisé et chauffé,
   - transférer le flux d'air pressurisé et chauffé provenant du compresseur (2) vers une turbine à gaz (4) pour effectuer un travail et produire un flux d'air de sortie froid à une pression d'environ 0,8 bar,

   **caractérisé en ce que** le procédé comprend en outre les étapes suivantes:

   - transférer le flux d'air de sortie froid provenant de la turbine à gaz (4) vers un condenseur (5) pour condenser un gaz réfrigérant dans le condenseur (5) en utilisant le flux d'air froid en sortie provenant de la turbine à gaz (4) afin d'obtenir un fluide réfrigérant, dans lequel le flux d'air froid en sortie utilisé dans le condenseur (5) est transféré vers l'échangeur de chaleur (1) pour le refroidissement de l'air atmosphérique externe entrant, complétant ainsi le cycle de la turbine à gaz,
   - comprimer le liquide réfrigérant sortant du condenseur (5) à l'aide d'une pompe (6) pour obtenir un liquide réfrigérant sous pression,
   - chauffer le liquide réfrigérant sous pression sortant de la pompe (6) à la température atmosphérique à l'aide d'un réchauffeur I (7) pour obtenir un gaz réfrigérant chauffé et sous pression,
   - transférer le gaz réfrigérant chauffé et sous pression provenant du réchauffeur I (7) vers une turbine à vapeur (9) afin d'effectuer un travail par expansion et de produire une vapeur de sortie, dans lequel la vapeur de sortie provenant de la turbine à vapeur (9) est transférée vers le condenseur (5) afin d'utiliser la vapeur de sortie comme gaz réfrigérant à condenser, achevant ainsi le cycle de la turbine à vapeur.

8. Procédé de fonctionnement d'une turbomachine à deux cycles selon la revendication 7, **caractérisé en ce qu'**il comprend la compression du liquide réfrigérant sortant du condenseur d'un avion par la pompe (6) jusqu'à une pression de 4000 kPa.

# Figure 1

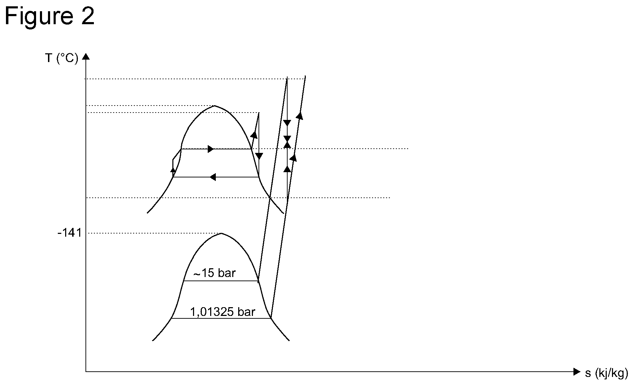

## Figure 2

T (°C)

-141

~15 bar

1,01325 bar

s (kj/kg)

Figure 3

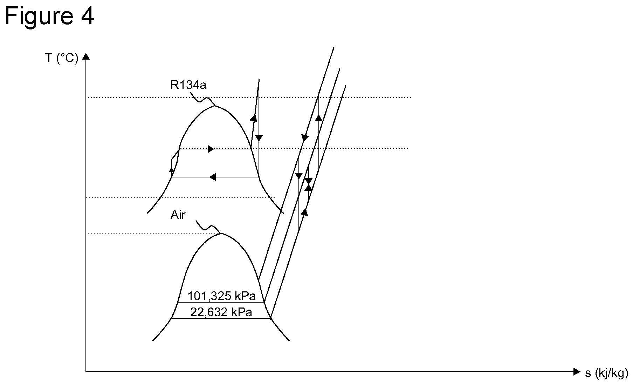

Figure 4

Figure 5

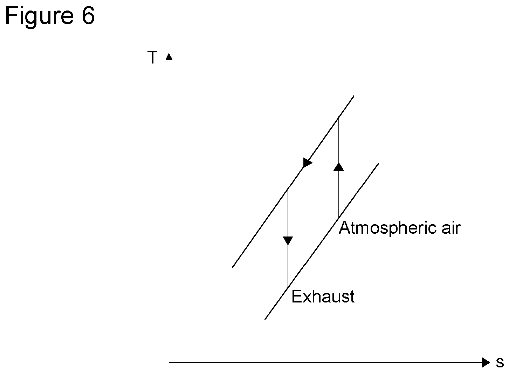

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5680764 A
- US 2004003592 A1
- EP 3075985 A1
- CN 105370409 A
- US 5704209 A
- WO 2021191786 A1
- US 2022145778 A1